# EUROPÄISCHE PATENTSCHRIFT

(11) **EP 1 036 284 B1**
(45) Veröffentlichungstag und Bekanntmachung des Hinweises auf die Patenterteilung: **13.03.2002**
(21) Anmeldenummer: 98965784.6
(22) Anmeldetag: 08.12.1998
(51) Int. Cl.: F16L 11/08

(54) **TEXTILE VERSTÄRKUNGSLAGE FÜR SCHLÄUCHE, ROHRE UND ÄHNLICHE LANGGESTRECKTE KÖRPER**
TEXTILE REINFORCING LAYER FOR FLEXIBLE HOSES, TUBES AND SIMILAR EXTENDED OBJECTS
COUCHE TEXTILE DE RENFORCEMENT POUR TUYAUX FLEXIBLES, TUBES ET CORPS ALLONGES SIMILAIRES

(30) Priorität: 08.12.1997 DE 19754448
(43) Veröffentlichungstag der Anmeldung: 20.09.2000
(73) Patentinhaber: MILLIKEN EUROPE N.V., B-9000 Gent (BE)
(72) Erfinder: DE MEYER, Willy, B-9031 Drongen (BE); FAKET, Mark, B-9000 Gent (BE)
(74) Vertreter: HOFFMANN - EITLE
(86) Internationale Anmeldenummer: EP9807957
(87) Internationale Veröffentlichungsnummer: WO9930069

(56) Entgegenhaltungen:
- EP-A- 0 596 147
- GB-A- 1 030 207
- GB-A- 2 026 129
- US-A- 2 690 769
- US-A- 3 814 138

## Beschreibung

Die Erfindung betrifft eine textile Verstärkungslage für Schläuche, Rohre und ähnliche langgestreckte Körper, die wenigstens eine Innenlage, die textile Verstärkungslage und eine Außenlage umfassen, die mit der textilen Verstärkungslage und der Innenlage verbunden wird, sowie die vorgenannten Produkte, die unter Verwendung einer solchen textilen Verstärkungslage hergestellt worden sind. Insbesondere betrifft die Erfindung mit einem textilen Erzeugnis verstärkte Schläuche oder Rohre, die gekrümmt sind und/oder längs ihrer Erstreckung eine große Durchmesseränderung aufweisen. Schläuche dieser Art werden beispielsweise in Kraftfahrzeugen verwendet, um einen Turbolader mit einem Ladeluftkühler bzw. mit dem Ansaugtrakt des zugehörigen Verbrennungsmotors zu verbinden.

Rohre und Schläuche mit Krümmungen und/oder großen Durchmesseränderungen, die aus Stabilitätsgründen mit einer textilen Verstärkungslage versehen sind, werden üblicherweise wie folgt hergestellt: Zuerst wird eine Schlauch- bzw. Rohrinnenlage in der gewünschten Form hergestellt, dann wird die textile Verstärkungslage auf die Innenlage aufgebracht, und schließlich wird eine Außenlage - häufig unter Temperatureinwirkung - aufgebracht, um einen innigen Verbund zwischen der Innenlage, der textilen Verstärkungslage und der Außenlage zu schaffen. Das Material der Innenlage und der Außenlage bildet demnach die Matrix, in die die Verstärkungslage eingebettet ist.

Selbstverständlich können statt einer Verstärkungslage auch deren mehrere zum Einsatz kommen, wobei ggf. nach jeder Verstärkungslage eine Zwischenschicht aus Matrixmaterial aufgebracht wird.

Das bei der maschinellen Herstellung von Rohren oder Schläuchen bestehende Problem liegt vor allem darin, die textile Verstärkungslage möglichst gut, d.h. faltenfrei und einfach auf die Innenlage aufzubringen. Häufig kommt es nämlich zu einer Faltenbildung der textilen Verstärkungslage im Zuge des Zusammenführens des zunächst flächigen Textilerzeugnisses in beispielsweise eine Schlauch- bzw. Rohrform. Dadurch entstehen Zonen, in denen die Verstärkungslage auf der Innenlage nicht oder nicht vollständig überlappt. Ersichtlich werden die Produkteigenschaften durch solche Fehlstellen enorm verschlechtert. Bei Rohren oder Schläuchen mit großer Durchmesservariation besteht darüber hinaus das Problem, daß das die Grundlage der textilen Verstärkungslage bildende Material umso weniger dazu bereit ist, große Durchmesseränderungen mitzumachen, je weniger elastisch es ist. Besonders bei Textilerzeugnissen aus hochfesten Materialien, wie Aramidfasern, Glasfasern, Carbonfasern, Metallfasern und auch Zellulosefasern tritt das vorgenannte Problem verstärkt auf.

Um der textilen Verstärkungslage eine ausreichende Fähigkeit zu geben, sich in Radialrichtung auszudehnen und damit Durchmesseränderungen folgen zu können, werden die zur Verstärkung verwendeten Textilerzeugnisse häufig sehr "dicht", d.h. in Radialrichtung stark zusammengeschoben gefertigt. Solche "dichten" Textilerzeugnisse lassen sich allerdings maschinell nur schlecht oder überhaupt nicht auf die Innenlage des zu verstärkenden Körpers aufbringen, da es beim Zusammenführen des zunächst flächigen Textilerzeugnisses in beispielsweise eine Schlauch- bzw. Rohrform ähnlich wie oben beschrieben einerseits zu unkontrollierbaren Materialanhäufungen an manchen Stellen und andererseits zu Bereichen kommt, in denen sich kein textiles Verstärkungsmaterial befindet.

Um Fehler dieser Art zu vermeiden, wird heutzutage die Verstärkungslage vielfach noch in Handarbeit auf die Innenlage des Rohres oder Schlauches aufgebracht. Häufig wird das der Verstärkung dienende, zunächst flächige Textilerzeugnis zu einem sogenannten Strumpf genäht, der dann über die Innenlage gezogen wird. Wo versucht wurde, die Verstärkungslage maschinell aufzubringen, war das verwendete Textilerzeugnis - häufig eine Strickware - wie oben erklärt zu "dicht" und damit zu schwer, was zu den bereits erläuterten Problemen einer ungleichmäßigen Aufbringung führte. Darüber hinaus sind diese Textilerzeugnisse sehr teuer.

Der Erfindung liegt die Aufgabe zugrunde, eine textile Verstärkungslage anzugeben, die für Schläuche, Rohre und ähnliche langgestreckte Körper verwendbar ist, und die maschinell, d.h. on-line, einwandfrei auf die Innenlage des zu verstärkenden Körpers aufzubringen ist. Gemäß einer Weiterbildung soll die erfindungsgemäße Verstärkungslage darüber hinaus große Durchmesseränderungen problemlos mitmachen.

Diese Aufgabe ist erfindungsgemäß dadurch gelöst, daß die textile Verstärkungslage eine Versteifung aus einem Material aufweist, das bei üblicher Umgebungstemperatur zumindest in einer von der Längsachse des zu verstärkenden Körpers abweichenden Richtung, insbesondere im wesentlichen quer zur Längsachse des zu verstärkenden Körpers, versteifend wirkt. Auf diese Weise, d.h. durch eine gezielt vorwiegend in Querrichtung versteifte Verstärkungslage, kann diese Verstärkungslage maschinell ohne weiteres auf die Innenlage eines zu verstärkenden Körpers aufgebracht werden, denn sie kann ohne Faltenbildung aus dem flächigen Zustand in die dem zu verstärkenden Körper entsprechende, räumliche Form gebracht werden, etwa durch Führen der Verstärkungslage durch eine sich konisch verengende Öffnung entsprechender Form.

Gemäß einer bevorzugten Weiterbildung verliert das versteifende Material bei einer erhöhten Temperatur, wie sie z.B. beim Verbinden der Außenlage mit der textilen Verstärkungslage und der Innenlage auftritt, seine versteifende Wirkung. Die erfindungsgemäße Versteifung verleiht der textilen Verstärkungslage also die zum einwandfreien Aufbringen auf die Innenlage erwünschte Querstabilität, ohne daß diese Querstabilität später die Verstärkungslage in unerwünschter Weise daran hindert, einer Durchmesseränderung des zu verstärkenden Körpers zu folgen.

Damit die Versteifung der erfindungsgemäßen textilen Verstärkungslage ihre versteifende Wirkung verliert, kann beispielsweise der Schmelzpunkt des die Versteifung bildenden Materials niedriger als der Schmelzpunkt des Verstärkungsmaterials sein, so daß das die Versteifung bildende Material schmilzt, wenn die Außenlage unter Temperatureinwirkung auf die Verstärkungslage und die Innenlage aufgebracht wird. Es ist allerdings nicht erforderlich, daß das die Versteifung bildende Material beim Aufbringen der Außenlage schmilzt, vielmehr reicht es bereits aus, wenn das die Versteifung bildende Material trotz seiner versteifenden Wirkung entweder ausreichend elastisch ist oder infolge der ggf. auftretenden Temperaturerhöhung soweit nachgibt, daß die Verstärkungslage einer Durchmesseränderung des zu verstärkenden Körpers ohne weiteres folgen kann.

Im einfachsten Fall besteht die Versteifung aus einzelnen Fäden oder Garnen, die sich derart erstrecken, daß die textile Verstärkungslage in Querrichtung versteift wird. Beispielsweise können die Fäden oder Garne diagonal zur Längsachse des verstärkenden Körpers oder aber auch rechtwinklig dazu verlaufen.

Die Versteifung kann jedoch selbst ein textiles Erzeugnis sein, z.B. ein Gewebe, ein Gewirk, ein Gestrick, ein Gelege, ein Vlies usw.

Gemäß einer alternativen Ausführungsform umfaßt die Versteifung wenigstens eine Folie. Beispielsweise kann das die Verstärkungslage bildende Textilerzeugnis auf eine Folie geklebt oder zwischen zwei Folien eingeschlossen sein. Die Folie kann aus thermoplastischem Material, aus warmausgehärtetem Kunststoff, oder auch aus Metall bestehen. Die Folie kann, wenn sich ihr Material dazu eignet, zusammen mit der textilen Verstärkungslage extrudiert werden.

Gemäß einer abgewandelten Form der vorliegenden Erfindung können eine oder mehrere der vorgenannten Folien anstelle der textilen Verstärkungslage treten. Bei einer solchen Ausführungsform wird demnach die zumindest in Querrichtung erfolgende Versteifung durch die Folie oder die Folien hervorgerufen.

Die vorgenannten Ausführungsformen einer Versteifung können mit der textilen Verstärkungslage auch einen textilen Verbund bilden. Beispielsweise kann die Verstärkungslage auf einem Gelege aus einzelnen Fäden oder Garnen angeordnet sein, die die Versteifung bewirken. Alternativ können Fäden oder Garne der textilen Verstärkungslage selbst aus einem Material bestehen, das die gewünschte Versteifung bewirkt. So kann die textile Verstärkungslage beispielsweise aus einem ersten Material bestehende Fäden, Garne oder Fasern mit einer hohen Zugfestigkeit aufweisen, die die verstärkende Wirkung der Verstärkungslage ergeben, und kann darüber hinaus aus einem zweiten Material bestehende Fäden, Garne oder Fasern aufweisen, die weniger temperaturstabil sind und die die gewünschte Versteifung ergeben. Auch kann eine die Versteifung bildende Folie beispielsweise in die textile Verstärkungslage eingewebt sein. Unabhängig davon, ob zwischen der Verstärkungslage und der Versteifung ein textiler Verbund besteht oder nicht, muß der Zusammenhalt zwischen der textilen Verstärkungslage und ihrer Versteifung so stabil sein, daß er sich nicht während der maschinellen Aufbringung der Verstärkungslage auf die Innenlage eines zu verstärkenden Körpers löst.

Gemäß einer noch anderen Ausführungsform ist die Versteifung ein chemischer Stoff, der von der textilen Verstärkungslage aufgenommen wird. Die textile Verstärkungslage kann zum Beispiel mit diesem chemischen Stoff getränkt werden, der dann trocknet und dabei aushärtet und so die Verstärkungslage versteift.

Unabhängig von der gewählten Form der Versteifung soll diese primär eine erhöhte Quersteifigkeit der textilen Verstärkungslage bewirken. Es ist allerdings unschädlich und manchmal sogar erwünscht, wenn durch die gewählte Form der Versteifung zusätzlich auch eine Versteifung der textilen Verstärkungslage in Längsrichtung eintritt, denn diese stört beim Aufbringungsvorgang nicht und verschwindet später zusammen mit der erhöhten Quersteifigkeit.

Das Material, aus dem die Versteifung besteht, kann beispielsweise ein dem Material der textilen Verstärkungslage ähnliches Material sein, etwa ein Polymer oder Copolymer. Bevorzugt ist das die Versteifung bildende Material allerdings das - entsprechend modifizierte - Matrixmaterial des zu verstärkenden Körpers oder ein verwandtes Material. Dieses kann die oben erläuterten Ausbildungen annehmen oder auch als Lösung auf die Verstärkungslage aufgegeben werden.

Gut als Versteifungsmateriäl geeignete Stoffe sind Polyacetate, Polyethylenterephthalat, Polybutylterephthalat, Caprolactame und andere Kunststoffe.

Erfindungsgemäß kann somit jede textile Verstärkungslage temporär versteift werden. Die textile Verstärkungslage ist bevorzugt ein Gestrick, kann jedoch auch ein Gewebe, ein Gewirk, ein Gelege, ein Vlies oder jedes andere Textilerzeugnis sein. Die erfindungsgemäße Versteifung erhöht die Stabilität der Verstärkungslage zumindest in einer von der Längsachse des zu verstärkenden Körpers abweichenden Richtung und vorzugsweise in Querrichtung zumindest solange, bis die Außenlage bzw. die nächste Lage aus Matrixmaterial unter Temperatureinwirkung aufgebracht wird. Erfindungsgemäß ist es deshalb möglich, langgestreckte Körper, die aus einer Innenlage, einer darauf angeordneten textilen Verstärkungslage und einer Außenlage bestehen, in einem Schritt maschinell zu extrudieren und ggf. mit großen Durchmesseränderungen zu versehen (etwa bis 1:2,2).

## Patentansprüche

1. Langgestreckte textile Verstärkungslage für Schläuche, Rohre und ähnliche langgestreckte Körper, die wenigstens eine Innenlage, die textile Verstärkungslage und eine Außenlage umfassen, die mit der textilen Verstärkungslage und der Innenlage verbunden wird,
**dadurch gekennzeichnet, daß** die textile Verstärkungslage eine Versteifung aus einem Material aufweist, das bei üblicher Umgebungstemperatur in einer von der Längsachse der Verstärkungslage abweichenden Richtung, insbesondere im wesentlichen quer zur Längsachse der Verstärkungslage, versteifend wirkt.

2. Verstärkungslage nach Anspruch 1,
**dadurch gekennzeichnet, daß** das versteifende Material bei einer erhöhten Temperatur, die für die Verstärkungslage unschädlich ist, seine versteifende Wirkung verliert.

3. Verstärkungslage nach Anspruch 1 oder 2,
**dadurch gekennzeichnet, daß** die Versteifung aus einzelnen Fäden oder Garnen besteht.

4. Verstärkungslage nach Anspruch 1 oder 2,
**dadurch gekennzeichnet, daß** die Versteifung selbst ein textiles Erzeugnis ist, z.B ein Gewebe, ein Gewirk, ein Gestrick, ein Gelege oder ein Vlies.

5. Verstärkungslage nach Anspruch 1 oder 2,
**dadurch gekennzeichnet, daß** die Versteifung wenigstens eine Folie umfaßt.

6. Verstärkungslage nach Anspruch 5,
**dadurch gekennzeichnet, daß** die Folie aus thermoplastischem Material, aus warmausgehärtetem Kunststoff, oder aus Metall besteht.

7. Verstärkungslage nach Anspruch 5 oder 6,
**dadurch gekennzeichnet, daß** die Folie zusammen mit der textilen Verstärkungslage extrudiert ist.

8. Verstärkungslage nach einem der Ansprüche 3 bis 6,
**dadurch gekennzeichnet, daß** die Versteifung mit der Verstärkungslage einen textilen Verbund bildet.

9. Verstärkungslage nach Anspruch 1 oder 2,
**dadurch gekennzeichnet, daß** die Versteifung ein chemischer Stoff ist, der von der Verstärkungslage aufgenommen wird.

10. Verstärkungslage nach einem der vorhergehenden Ansprüche, **dadurch gekennzeichnet, daß** das Material der Versteifung ein Polymer oder ein Copolymer ist.

11. Verstärkungslage nach einem der vorhergehenden Ansprüche, **dadurch gekennzeichnet, daß** das die Versteifung bildende Material das Matrixmaterial des zu verstärkenden Körpers oder ein verwandtes Material ist.

12. Verstärkungslage nach einem der vorhergehenden Ansprüche, **dadurch gekennzeichnet, daß** der Schmelzpunkt des die Versteifung bildenden Materials niedriger als der Schmelzpunkt des Verstärkungsmaterials ist.

13. Verstärkungslage nach einem der vorhergehenden Ansprüche, **dadurch gekennzeichnet, daß** die Verstärkungslage ein Gewebe, ein Gewirk, ein Gestrick, ein Gelege oder ein Vlies ist.

14. Schlauch, Rohr oder ähnlicher langgestreckter Körper, **gekennzeichnet durch** eine oder mehrere Verstärkungslagen gemäß einem der vorhergehenden Ansprüche, wobei die Versteifung der Verstärkungslage(n) bei üblicher Umgebungstemperatur in einer von der Längsachse des zu verstärkenden Körpers abweichenden Richtung, insbesondere im wesentlichen quer zur Längsachse des zu verstärkenden Körpers, versteifend wirkt.

## Claims

1. Elongate textile reinforcing layer for hoses, tubes and the like elongate bodies which include at least one inner layer, the textile reinforcing layer and an outer layer which is connected to the textile reinforcing layer and the inner layer, **characterised in that** the textile reinforcing layer comprises a stiffening made of a material which at normal ambient temperature has a stiffening effect in a direction diverging from the longitudinal axis of the reinforcing layer, in particular substantially transversely to the longitudinal axis of the reinforcing layer.

2. Reinforcing layer according to claim 1, **characterised in that** the stiffening material loses its stiffening effect at an elevated temperature which is harmless to the reinforcing layer.

3. Reinforcing layer according to claim 1 or 2, **characterised in that** the stiffening consists of individual threads or yarns.

4. Reinforcing layer according to claim 1 or 2, **characterised in that** the stiffening itself is a textile product, e.g. a woven fabric, a knitted fabric, an interlaid fabric or a fleece.

5. Reinforcing layer according to claim 1 or 2, **characterised in that** the stiffening includes at least one film.

6. Reinforcing layer according to claim 5, **characterised in that** the film is made of thermoplastic material, of heat-cured plastic, or of metal.

7. Reinforcing layer according to claim 5 or 6, **characterised in that** the film is extruded together with the textile reinforcing layer.

8. Reinforcing layer according to any of claims 3 to 6, **characterised in that** the stiffening forms with the reinforcing layer a textile composite.

9. Reinforcing layer according to claim 1 or 2, **characterised in that** the stiffening is a chemical substance which is absorbed by the reinforcing layer.

10. Reinforcing layer according to any of the preceding claims, **characterised in that** the material of the stiffening is a polymer or a copolymer.

11. Reinforcing layer according to any of the preceding claims, **characterised in that** the material forming the stiffening is the matrix material of the body to be reinforced or a related material.

12. Reinforcing layer according to any of the preceding claims, **characterised in that** the melting point of the material forming the stiffening is lower than the melting point of the reinforcing material.

13. Reinforcing layer according to any of the preceding claims, **characterised in that** the reinforcing layer is a woven fabric, a knitted fabric, an interlaid fabric or a fleece.

14. Hose, tube or the like elongate body, **characterised by** one or more reinforcing layers according to any of the preceding claims, wherein the stiffening of the reinforcing layer(s) at normal ambient temperature has a stiffening effect in a direction diverging from the longitudinal axis of the body to be reinforced, in particular substantially transversely to the longitudinal axis of the body to be reinforced.

## Revendications

1. Couche de renfort textile allongée pour des tuyaux, des tubes et des corps allongés similaires, qui comportent au moins une couche intérieure, la couche de renfort textile et une couche extérieure, qui est reliée à la couche de renfort textile et à la couche intérieure, **caractérisée en ce que** la couche de renfort textile comporte un raidisseur formé d'un matériau qui a un effet de renforcement à une température ambiante usuelle, dans une direction qui diffère de l'axe longitudinal de la couche de renfort, notamment essentiellement transversalement par rapport à l'axe longitudinal de la couche de renfort.

2. Couche de renfort selon la revendication 1, **caractérisée en ce qu'**à un température accrue, qui n'est pas nuisible pour la couche de renfort, le matériau de raidisseur perd son action de raidissement.

3. Couche de renfort selon la revendication 1 ou 2, **caractérisée en ce que** le raidisseur est constitué par des filaments ou des fils individuels.

4. Couche de renfort selon la revendication 1 ou 2, **caractérisée en ce que** le raidisseur lui-même est un produit textile, par exemple un tissu, un tricot, un tulle, un tissu maillé ou une nappe.

5. Couche de renfort selon la revendication 1 ou 2, **caractérisée en ce que** le renfort comprend au moins une feuille.

6. Couche de renfort selon la revendication 5, **caractérisée en ce que** la feuille est réalisée en une matière thermoplastique, une matière plastique durcie par effet thermique ou un métal.

7. Couche de renfort selon la revendication 5 ou 6, **caractérisée en ce que** la feuille est extrudée conjointement avec la couche de renfort textile.

8. Couche de renfort selon l'une des revendications 3 à 6, **caractérisée en ce que** le raidisseur forme, avec la couche de renfort, un composé textile.

9. Couche de renfort selon la revendication 1 ou 2, **caractérisée en ce que** le raidisseur est une substance chimique qui est absorbée par la couche de renfort

10. Couche de renfort selon l'une des revendications précédentes, **caractérisée en ce que** le matériau du raidisseur est un polymère ou un copolymère.

11. Couche de renfort selon l'une des revendications précédentes, **caractérisée en ce que** le matériau raidisseur est le matériau matriciel du corps de renfort ou un matériau similaire.

12. Couche de renfort selon l'une des revendications précédentes, **caractérisée en ce que** le point de fusion du matériau raidisseur est inférieur au point de fusion du matériau de renfort.

13. Couche de renfort selon l'une des revendications précédentes, **caractérisée en ce que** la couche de renfort est un tissu, un tricot, un tulle, un tissu maillé ou une nappe.

14. Tuyau, tube ou corps allongé similaire, **caractérisé par** une ou plusieurs couches de renfort selon l'une des revendications précédentes, le raidisseur de la ou les couches de renfort agissant, à une température ambiante usuelle, dans une direction qui diffèrent de l'axe longitudinal du corps devant être renforcé, notamment essentiellement transversalement par rapport à l'axe longitudinal du corps devant être renforcé.
